(19) **Europäisches Patentamt**

**European Patent Office**

**Office européen des brevets**

(11) **EP 1 649 969 A2**

(12) **EUROPÄISCHE PATENTANMELDUNG**

(43) Veröffentlichungstag:
26.04.2006 Patentblatt 2006/17

(51) Int Cl.:
*B23P 15/00* (2006.01)   *B23P 15/24* (2006.01)
*B41F 13/11* (2006.01)   *B44B 5/00* (2006.01)

(21) Anmeldenummer: 05022756.0

(22) Anmeldetag: 19.10.2005

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **20.10.2004 DE 102004050984**

(71) Anmelder: **Hueck Folien GmbH & Co. KG**
**92712 Pirk (DE)**

(72) Erfinder:
• **Trassl, Stephan, Dr.**
**95478 Kemnath (DE)**
• **Reich, Peter**
**92712 Pirk (DE)**

(74) Vertreter: **Landgraf, Elvira**
**Schulfeld 26**
**4210 Gallneukirchen (AT)**

(54) **Endlose Nickelmatritze zur Herstellung strukturierter Oberflächen**

(57) Endlose Nickelmatrize zur Herstellung von strukturierten Oberflächen, dadurch gekennzeichnet, dass sie hergestellt wird durch winkelgerechtes Montieren einer flachen und/oder rekombinierten mit einem UV-härtbaren Lack beschichteten Prägeform auf einen Hohlyzylinder, wobei anschließend durch Überprägen eine endlose Struktur erzeugt wird, und in einem weiteren Schritt die Metallabscheidung erfolgt, wodurch ein selbsttragender Metallzylinder entsteht, der anschließend einem Elektroformingverfahren unterworfen wird.

EP 1 649 969 A2

**Beschreibung**

Zur Herstellung bahnförmiger Folien mit strukturierten Oberflächen werden üblicherweise Nickelmatrizen verwendet.

Unter strukturierten Oberflächen werden im Folgenden Beugungsstrukturen, Beugungsgitter, Reflexionsmuster, Oberflächenreliefstrukturen, Hologramme, Kinegramme und dergleichen, verstanden.

Diese Nickelmatrizen werden entweder als Halbschalen auf einem Zylinder befestigt oder als Hohlzylinder auf einen sogenannten Spannzylinder aufgezogen oder geklebt.

Diese Hohlzylindermatrizen werden dabei durch Laserschweißen einer entsprechenden Nickelfolie hergestellt.

Bei allen diesen Methoden entsteht zumindest eine Fügenaht, die dann beim Abformen des Hologramms stark sichtbar wird. Ferner entstehen leicht unregelmäßige Abstände zwischen den Rapporten der eingehen Motivblöcke.

Aufgabe der Erfindung war es daher eine endlose fügenahtlose Nickelmatrize, die zur Herstellung strukturierter Oberflächen auf bahnförmigen Materialien geeignet ist, bereitzustellen.

Gegenstand der Erfindung ist daher eine endlose Nickeimatrize zur Herstellung strukturierter Oberflächen, wie Beugungsstrukturen, Beugungsgitter, Reflexionsmuster, Oberflächenreliefstrukturen, Hologramme, Kinegramme und dergleichen, dadurch gekennzeichnet, dass sie hergestellt wird durch winkelgerechtes Montieren einer flachen und/oder rekombinierten Prägeform auf eine Trommel, wobei anschließend durch Überprägen auf einen mit UV-härtbaren. Lack beschichteten Zylinder eine endlose Struktur erzeugt wird, und in einem weiteren Schritt die Metallabscheidung erfolgt, wodurch ein selbsttragender Metallzylinder entsteht, der anschließend einem Elektroformingverfahren unterworfen wird.

Dazu wird ein transparenter Kunststoff-Hohlzylinder z.B. Polymethylmetacrylat auf genaues Umfangmaß eingestellt, wobei das Umfangmaß mit einem Polishmaster angepasst werden kann.

Dieser Hohlzylinder wird auf einen Spannzylinder aufgezogen. Ein geeignetes Verfahren ist beispielsweise in der DE 100 39 744 beschrieben.

Die Wandstärke des transparenten Polymethylmetacrylat-Hohlzylinders beträgt vorzugsweise etwa 1 bis 10 mm.

Anschließend wird dieser Hohlzylinder mit einem UV-härtbaren Lack, beispielsweise auf Basis eines Polyester-, eines Epoxy- oder Polyurethansystems beschichtet. Die Beschichtung wird mit einem üblichen Beschichter vorgenommen.

Die Übertragung des UV-härtbaren Lacks auf den Hohlzylinder erfolgt mittels eines Übertragungsrades. Dabei dreht sich der Hohlzylinder mit dem Spannzylinder, das Übertragungsrad dreht sich in Achsrichtung und fährt parallel zum Zylinder.

Der strahlungshärtbare . Lack kann beispielsweise ein strahlungshärtbares Lacksystem auf Basis eines Polyester-, eines Epoxy- oder Polyurethansystems das 2 oder mehr verschiedene, dem Fachmann geläufige Photoinitiatoren enthält, die bei unterschiedlichen Wellenlängen eine Härtung des Lacksystems in unterschiedlichem Ausmaß initiieren können. So kann beispielsweise ein Photoinitiator bei einer Wellenlänge von 200 bis 400 nm aktivierbar sein, der zweite Photoinitiator dann bei einer Wellenlänge von 370 bis 600 nm aktivierbar. Zwischen den Aktivierungswellenlängen der beiden Photoinitiatoren sollte genügend Differenz eingehalten werden, damit nicht eine zu starke Anregung des zweiten Photoinitiators erfolgt, während der erste Photoinitiator aktiviert wird. Der Bereich, in dem der zweite Photoinitiator angeregt wird, sollte im Transmissionswellenlängenbereich des verwendeten Trägers liegen. Für die Haupthärtung (Aktivierung des zweiten Photoinitiators) kann auch Elektronenstrahlung verwendet werden.

Als strahlungshärtbarer Lack kann auch ein wasserverdünnbarer Lack verwendet werden. Bevorzugt werden Lacksysteme auf Polyesterbasis.

Die Abformung der Oberflächenstruktur, also der Diffraktions-, Beugungs- oder Reliefstruktur erfolgt beispielsweise bei kontrollierter Temperatur mittels einer Matrize oder unter Verwendung einer Prägeform in die strahlungshärtbare Lackschicht, die durch Aktivierung des ersten Photoinitiators bis zum Gelpunkt vorgehärtet wurde und zum Zeitpunkt der Abformung sich in diesem Stadium befindet.

Wird ein wasserverdünnbarer strahlungshärtbarer Lack verwendet kann gegebenenfalls eine Vortrocknung vorgeschaltet werden, beispielsweise durch IR-Strahler.

Die Schichtdicke des aufgebrachten strahlungshärtbaren Lacks kann je nach Anforderung variieren und beträgt im allgemeinen zwischen 0,5 und 50 $\mu$m, vorzugsweise zwischen 2 und 10 $\mu$m, besonders bevorzugt zwischen 2 und 5 $\mu$m.

Eine flache und/oder rekombinierte Prägeform wird gegebenenfalls mit Hilfe von Justiermarken und einem Kameramontagesystem winkeigerecht auf eine Trommel montiert. Derartige Kameramontagesysteme sind dem Fachmann beispielsweise aus der Photopolymermontage von Flexuzylindem bekannt.

Dabei gilt für den Umfang der Trommel:

$$U = \text{Umfang Hohlsleeve} + \text{Randbeschnitt} + \text{Befestigung}$$

Die flache und/oder rekombinierte Prägeform hat dabei Brutto- und Netto-Bereich.

Netto = später Fläche

Brutto = als Übergang für die nahtlose Reihenfolge der Motive notwendig

Das Endlosfügen wird durch Überprägen erzeugt, wobei gleichzeitig der UV-Lack durch UV- Strahlung vollständig ausgehärtet wird.

Die UV-Strahlungsquelle kann dabei innerhalb eines transparenten Polymethylmetacrylatzylinder situiert sein, oder außerhalb des Zylinders. Dabei muss auch der Spannzylinder transparent sein.

Auf den geprägten UV-Lack wird nun eine leitfähige Schicht, beispielsweise eine metallische Schicht aus Silber, Kupfer, Gold, Palladium, Platin oder Nickel aufgebracht. Die Aufbringung der Schicht kann durch Sprühen, Bedampfen, Sputtern oder durch chemisches Abscheiden erfolgen.

Anschließend wird der Zylinder in ein Galvanik-Bad, bekannt aus der Tiefdruckzylinderherstellung, eingebracht und auf dem Hohlzylinder z. B. Nickel abgeschieden und somit ein selbsttragender metallischer Zylinder erzeugt. Der PMMA-Hohlzylinder inkl. der Metallabscheidung wird nun vom Spannzylinder heruntergenommen. Mittels Temperatur, Druckluft und/oder Wasser wird nun der selbsttragende Metallzylinder, auf dem sich nun auf der inneren Oberfläche die Prägestruktur befindet, vom Hohlzylinder gelöst.

Dieser metallische Zylinder wird nun mittels eines innen liegenden Spannsystems, das auch gleichzeitig für den folgenden Elektroforming-Prozess als Anode wirkt, gespannt.

Um dabei von der inneren Oberfläche, auf der sich nun die Prägestruktur befindet, abformen zu können, muss diese innere Oberfläche mittels chemischer oder elektrochemischer Verfahren zur Aufbringung einer Passivierungs- oder Trennschicht durch Tauchen oder Sprühen behandelt werden.

Als Passivierungs- bzw. Trennschichten kommt beispielsweise eine dünne Cr-Schicht, eine Kaliumdichromatschicht, eine Kohlenstoffschicht und dergleichen in Frage.

Zur Abscheidung von Nickel wird nun ein Galvanikbad verwendet, bei dem das Spannsystem senkrecht eingebracht ist.

Nach der Abscheidung der entsprechenden Metalldicke, etwa 20-500 $\mu$m, bevorzugt etwa 80 - 200 $\mu$m wird die nun innen liegende selbst tragende Masterprägeform vom metallischen Zylinder getrennt.

Die Trennung von metallischem Zylinder und Masterprägeform erfolgt durch Abziehen der Kopie vom Master unter ständigem Wasserfluss und ggf. unter Temperaturerhöhung mit Hilfe eines geeigneten Verwindungswerkzeugs, beispielsweise einer Metall- oder Kunststoffzange. Ferner ist es möglich den metallischen Zylinder chemisch oder mechanisch zu zerstören und so die Masterprägeform zu erhalten.

**Patentansprüche**

1. Endlose Nickelmatrize zur Herstellung von strukturierten Oberflächen,
   **dadurch gekennzeichnet, dass** sie hergestellt wird durch winkelgerechtes Montieren einer flachen und/oder rekombinierten mit einem UV-härtbaren Lack beschichteten Prägeform auf einen Hohlyzylinder, wobei anschließend durch Überprägen eine endlose Struktur erzeugt wird, und in einem weiteren Schritt die Metallabscheidung erfolgt, wodurch ein selbsttragender Metallzylinder entsteht, der anschließend einem Elektroformingverfahren unterworfen wird.

2. Endlose Nickelmatrize nach Anspruch 1, **dadurch gekennzeichnet, dass** anschließend der nach dem Elektroforming Verfahren erhaltene Master mittels eines Verwindungsinrerkzeugs unter ständigem Wasserzufluss und ggf. Temperaturerhöhung vom metallischen Zylinder abgezogen wird, oder der Zylinder chemisch oder mechanisch zerstört wird.

3. Endlose Nickelmatrize nach einem der Ansprüche 1 bis 3, **dadurch gekennzeichnet, dass** der UV-härtbare Lack, mit dem der Hohlzylinder beschichtet ist, ein strahlungshärtbares Lacksystem auf Basis eines Polyester-, eines Epoxy- oder Polyurethansystems das 2 oder mehr verschiedene, dem Fachmann geläufige Photoinitiatoren enthält, die bei unterschiedlichen Wellenlängen eine Härtung des Lacksystems in unterschiedlichem Ausmaß initiieren können, ist.

4. Endlose Nickelmatrize nach einem der Ansprüche 1 bis 3, **dadurch gekennzeichnet, dass** die UV-Strahlungsquelle innerhalb oder außerhalb der Trommel situiert ist.

5. Endlose Nickelmatrize nach einem der Ansprüche 1 bis 3, **dadurch gekennzeichnet, dass** der selbsttragende Metallzylinder vor der Durchführung des Elektroformingverfahrens mit einer Passivierungs- und/oder Trennschicht versehen wird.